# EUROPEAN PATENT SPECIFICATION

(11) **EP 2 350 513 B1**
(45) Date of publication and mention of the grant of the patent: **13.08.2014**
(21) Application number: 08875906.3
(22) Date of filing: 29.12.2008
(51) Int. Cl.: F16L 11/08

(54) **IRRIGATION HOSE WITH HIGH PRESSURE RESISTANCE AND TORSION STRENGTH**
BEWÄSSERUNGSSCHLAUCH MIT HOCHDRUCKWIDERSTAND UND TORSIONSFESTIGKEIT
TUYAU D'IRRIGATION AVEC RÉSISTANCE ÉLEVÉE À LA PRESSION ET RÉSISTANCE ÉLEVÉE À LA TORSION

(30) Priority: 31.10.2008 IT VI20080042 U
(43) Date of publication of application: 03.08.2011
(73) Proprietor: Tecnotubi Picena S.R.L., 63030 Monsanpaolo Del Tronto (AP) (IT)
(72) Inventor: SPINELLI, Roberto, I-63100 Ascoli Piceno (ap) (IT)
(74) Representative: Autuori, Angelo
(86) International application number: PCT/IB2008/055554
(87) International publication number: WO 2010/049762

(56) References cited:
- EP-A- 1 508 737
- FR-A- 2 762 376
- JP-A- 2 020 572
- US-A- 5 647 400
- US-A1- 2002 112 770
- US-A1- 2006 127 620
- US-B1- 6 179 008

## Description

### Field of invention

The present invention generally finds application in the technical field of flexible hoses, and particularly relates to an irrigation hose with high pressure resistance and torsion strength.

### Background of the invention

Five-layer irrigation hoses are known in the art. These prior art hoses are composed, in sequential order, of an inner layer or substrate in direct contact with the liquid to be conveyed, a braided fabric reinforcement layer, an intermediate layer, a knitted fabric reinforcement layer and an outer layer susceptible of being in contact with the hands of a user. Typically, all tubular layers are made of thermoplastic polymer material, generally plasticized PVC, whereas fabric reinforcement layers are made of polyester yarn.

The European patent application EP-A1-1156252 and the French utility model application FR-A3-2762376 disclose examples of such prior art hoses, which have good burst and working pressure values. Nonetheless, these solutions are unsuitable for more demanding applications, such as those requiring burst pressures of 40 bar or more.

Burst pressure of hoses is typically increased by changing the parameters of fabric reinforcement layers. For example, the burst pressure of hoses is known to be increased by increasing the number and/or decreasing the density of yarns of the fabric layers.

However, this will also increase production costs and manufacturing complexity.

On the other hand, high pressure hoses are known which have a fabric layer of a special material with a high failure load, such as Kevlar or the like. Nonetheless, here again the high cost of such materials affects cost effectiveness of a hose that is required to have a low cost, considering its market.

Prior art hoses with two fabric reinforcement layers are also typically deemed to have a good anti-torsion effect.

However, in practice, these prior art hoses with two fabric layers only exhibit good anti-torsion properties at low working pressures, namely to 4 - 5 bar. Above such value, prior art hoses tend to lose such properties and become actually unusable at working pressures of more than 5 bar.

From US2002/112770 a hose is known having all the features of the preamble of the independent claim 1.

### Summary of the invention

The object of this invention is to overcome at least part of the above drawbacks, by providing a hose of simple and inexpensive manufacture and of high pressure strength.

These and other objects, as better explained hereafter, are fulfilled by a hose as defined in claim 1.

By this combination of features, the hose of the invention will exhibit a high burst pressure resistance, close to 45 bar or more, while being manufactured in a simple and inexpensive manner.

Contrary to a known technical prejudice according to which the burst pressure of a hose may be increased by adjusting the parameters of the fabric layers, it has been found that the introduction of a sixth thermoplastic polymer layer between the inner and outer layers of prior art hoses can increase the hose resistance at a very low cost, actually corresponding to the cost of the fourth material of such layer.

Extrusion of a sixth layer is also much simpler and less burdensome than the fabrication of a fabric layer with a great number of yarns.

As used herein, the term "fabric layer" and the like will be intended to indicate a layer composed of at least two yarns or sets of yarns arranged over a substrate.

Therefore, the two fabric reinforcement layers include a knitted layer and a braided layer.

As used herein, the term "fabric layer of braided type" and the like will be intended to indicate a layer composed of at least two yarns or sets of yarns spiral wound onto the substrate with opposite inclinations, superposed but not interwoven.

As used herein, the term "fabric layer of knitted type" and the like will be intended to indicate a layer composed of at least two yarns or sets of yarns arranged over the substrate and interwoven to form a plurality of chain stitches of the tricot type.

The hose of the invention further has excellent anti-kink properties, contrary to the current belief that such effect would be affected by an increase of the hose mass.

EP-A1-1156252 expressly mentions that a hose with two fabric layers has good anti-torsion properties, while affording reduced layer thicknesses and hence, a reduced intertial mass of the hose.

By overcoming such technical prejudice, the applicant surprisingly found that the interposition of an additional polymer layer between the inner and outer layers of prior art hoses considerably improves its anti-kink properties, as experimentally shown below.

Advantageously, the sixth layer may be external to both of said braided and knitted layers, and not interposed therebetween. In other words, the sixth layer may be in contact with the inner layer or the outer layer.

Conveniently, the sixth layer may include a coloring agent of the carbon black type, and may be interposed between the inner layer and the innermost layer of the fabric layers. In other words, the sixth layer may be in contact with the inner layer.

Thus, the sixth layer will effectively protect all the underlying agents from algal bloom, and particularly have such action on fabric layers, which are more exposed to such problem.

According to the invention, the sixth layer is a film with a thickness of less than 0,5 mm and may have an average thickness of about 0,3 mm.

The first polymer material, the second polymer material, the third polymer material and the fourth polymer material are identical.

The first polymer material, the second polymer material, the third polymer material and the fourth polymer material are compatible with each other.

As used herein, the term "compatible materials" or derivatives thereof shall be intended to indicate materials having a chemical and/or physical compatibility with each other, i.e. materials that, while in joined relationship, provide a junction adapted to support the transfer of tensile or shear stresses through the contact surface. The highest compatibility is thus achieved between identical materials or having the same matrix base.

As used herein, the term "matrix" of a polymer or derivatives thereof, shall be intended to indicate a polymer material that can provide the molecular structure of the final product.

According to the invention, the first, second, third and fourth polymer materials all have a plasticized PVC (polyvinyl chloride) based matrix.

As used herein, the term "matrix based on" or derivatives thereof, associated with the name of a polymer material, shall be intended to indicate a polymer material capable of providing the molecular structure of the polymer material whose name is associated with the term "matrix based on" to the final product.

Advantageous embodiments of the invention are defined in accordance with the dependent claims.

### Brief description of the drawings

Further features and advantages of the invention will be more apparent upon reading the detailed description of a preferred, non-exclusive embodiment of an irrigation hose of the invention, which is described as an example with the help of the annexed drawings, in which:
FIG. 1 is a sectional view of a hose of the invention;
FIG. 2 is an elevation view of a hose of the invention, showing the various layers.

### Detailed description of a preferred embodiment

Referring to the above figures, the irrigation hose of the invention, generally designated by numeral 1, is composed of six superposed layers.

It comprises, in sequential order from inside to outside, an inner layer or substrate 2 in direct contact with the liquid to be conveyed, usually water, an anti-algae film 3, a braided fabric layer 4, an intermediate layer 5, a knitted fabric layer 6 and an outer layer or cover 7 susceptible of being grasped by a user.

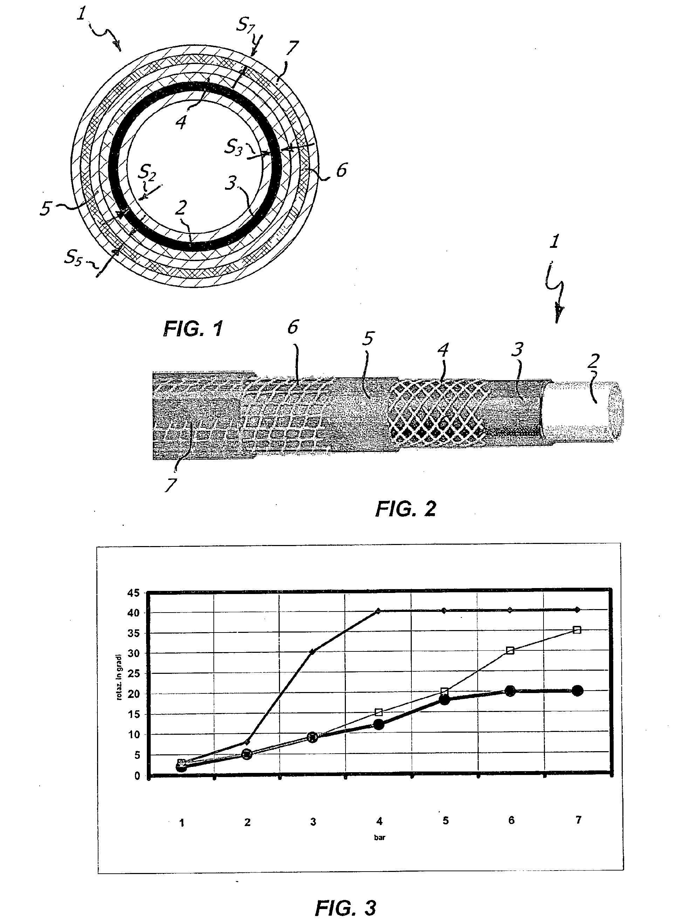

All tubular layers, i.e. the substrate 2, the anti-algae film 3, the intermediate layer 5, and the cover 7 have a plasticized PVC-based matrix. On the other hand, the braided fabric layer 4 and the knitted layer 6 may be made of polyester yarns, with a count of 1100 dtex. The braided fabric layer 4 may be formed of 10+10 or 12+12 yarns. The knitted layer 6 may be formed on the intermediate layer 5 by a knitting machine, known per se, in which the needle cage is stationary with the hole translating therein in the axial direction without revolving, so that the chain stitches are substantially parallel to the axis of the hose, as particularly shown in Figure 2.

Otherwise, the knitted fabric layer 6 may be formed in accordance with the teachings of Italian patent IT1270776, with lines and rows of stitches having opposite inclinations.

The cover 7, that may be optically transparent with a fine metalized effect, may have a satin-finished outer surface, for minimized friction with contact surfaces.

The carbon black coloring agent content may be from 0.1 % to 10% by weight of the material that forms the anti-algae film 3.

According to the invention, the plasticized PVC that forms the substrate 2 has a Shore A hardness of 80 to 70, preferably about 75, the plasticized PVC that forms the anti-algae film 3 and the cover 7 have a similar Shore A hardness, i.e. from 70 to 60, preferably about 65, and finally, the plasticized PVC of the intermediate layer 5 has a Shore A hardness of 63 to 73, preferably about 68.

Thus, the hose 1 will maintain its flexibility while having a very high burst pressure, close to 45 bar or more.

Concerning the thicknesses of the various layers and according to the invention, the thickness S₂ of the substrate 2 is of 0,5 mm to 1,8 mm, e.g. about 1 mm, the thickness S₃ of the film 3 is less than 0,5 mm, e.g. 0,3 mm, the thickness S₅ of the intermediate layer 5 is of 0,4 mm to 0,9 mm, e.g. 0,6 mm, and finally the thickness S₇ of the cover layer 7 is of 0,6 mm to 1 mm, e.g. 0,8 mm.

The hose of the invention can be obtained applying the following manufacturing method. First, the substrate 2 and the superimposed anti-algae film 3 are coextruded, then such semi-finished stock is introduced in a braiding machine of known type to form the braided fabric layer 4.

The intermediate layer 5 is extruded in a known manner onto the above stock coming out of the braiding machine. Now, the semi-finished stock formed by the extruder, which is composed of the substrate 2, the anti-algae film 3, the braiding 3 and the intermediate layer 5 is introduced into a knitting machine to form the knitting 6.

Finally, the cover 7 is extruded onto the semi-finished stock coming out of the knitting machine.

Comparative tests were carried out to determine the anti-torsion properties of the hose 1, as compared with a few prior art hoses.

The tests were carried out by blowing air at increasing pressure into a one meter-long hose specimen, held in vertical position by supports that allow it to rotate about its own axis. At each air pressure value, the rotation angle (in degrees) of the hose is measured using a goniometer attached to the base of the hose. The three hose specimens under test had the same interior diameter of 15,88 mm (5/8 inches, 5/8").

The results of these tests are summarized in Figure 3, wherein the angle of rotation (Y axis), for each hose sample is shown as a function of air pressure blown therein (X axis).

The symbol (◆) designates the rotation angle values for a hose specimen manufactured in accordance with the teachings of the above mentioned European Patent application EP-A1-1156252.

The symbol (■) designates the rotation angle values for a hose specimen manufactured in accordance with the teachings of the European Patent application EP-A1-0794377, in which a knitted layer is laid over another fabric layer formed of spirat wound yarns. In this application, the hose was indicated as exhibiting good anti-torsion effect.

Finally, the symbol (•) designates the rotation angle values for a hose specimen of this invention.

The hose of the invention appears to have a much smaller rotation angle than the five-layer hose manufactured in according with the teachings of the European Patent application EP-A1-1156252 even at as low a working pressure as 2 bar, indicating much better anti-torsion properties at low working pressures.

On the other hand, the hose of the invention has a much smaller rotation angle than the hose with an anti-torsion spiraled layer, manufactured in according with the teachings of the European Patent application EP-A1-0794377 from a working pressure of 5 bar, indicating better anti-torsion properties at relatively high working pressures.

The above description clearly shows that the invention fulfils the intended objects.

The hose of this invention is susceptible of a number of changes and variants, within the inventive concept disclosed in the appended claims.

While the hose has been described with particular reference to the accompanying figures, the numerals referred to in the disclosure and claims are only used for the sake of a better intelligibility of the invention and shall not be intended to limit the claimed scope in any manner.

## Claims

1. A six-layer irrigation hose comprising:
- an inner layer (2) in direct contact with the liquid to be conveyed which is made of a first thermoplastic polymer material;
- an outer layer (7) susceptible of being held by a user, made of a second thermoplastic polymer material;
- two fabric reinforcement layers (4, 6) interposed between said inner (2) and outer (7) layers;
- a separating layer (5) interposed between said fabric layers (4, 6), made of a third polymer material;
- a sixth layer (3) made of a fourth polymer material interposed between said inner (2) and outer (7) layers;
**characterized in that**:
- said two fabric reinforcement layers (4, 6) are of knitted and braided type, one of said two fabric layers (4, 6) being a braided layer and the other being a knitted layer having a plurality of chain stitches of the tricot type;
- said fourth polymer material is a thermoplastic polymer material;
- said first thermoplastic polymer material, second thermoplastic polymer material, third polymer material and fourth polymer material all include a plasticized PVC-based matrix;
- said first thermoplastic polymer material has a Shore A hardness of 80 to 70;
- said second thermoplastic polymer material and said fourth polymer material have a Shore A hardness of 70 to 60;
- said third polymer material has a Shore A hardness of 63 to 73;
- the thickness (S2) of the inner layer (2) is of 0,5 mm to 1,8 mm;
- the thickness (S5) of the separating layer (5) is of 0,4 mm to 0,9 mm;
- the thickness (S7) of the outer layer (7) is of 0,6 mm to 1 mm;
- said sixth layer (3) is a film having a thickness (S3) of less than 0,5 mm.

2. Hose as claimed in claim 1, wherein said sixth layer (3) is external to both of said fabric layers (4, 6).

3. Hose as claimed in claim 1, wherein said sixth layer (3) includes a coloring agent of the carbon black type for preventing algal bloom, said sixth anti-algae layer (3) being interposed between said inner layer (2) and the innermost layer of said fabric layers (4, 6).

4. Hose as claimed in the preceding claim, wherein said carbon black coloring agent content is from 0,1% to 10% by weight of said fourth polymer material.

5. Hose as claimed in claim 1, wherein said knitted fabric layer (6) is external to the separating layer (5), the latter being external to said braided fabric layer (4).

6. Hose as claimed in claims 3 and 5, wherein said braided fabric layer (4) is in contact with said sixth anti-algae layer (3).

7. Hose as claimed in claim 5 or 6, wherein said outer layer (7) is in contact with said knitted fabric layer (6).

## Patentansprüche

1. A Schicht-sechs Bewässerungsschlauch mit:
- eine innere Schicht (2) in direktem Kontakt mit der zu fördernden Flüssigkeit, die aus einem ersten thermoplastischen Polymermaterial hergestellt ist;
- eine Außenschicht (7) durch einen Benutzer, die aus einem zweiten thermoplastischen Polymermaterial hergestellt ist, gehalten werden;
- zwei Gewebeverstärkung Schichten (4, 6) des gestrickten und geflochtenen Typ, der zwischen dem inneren (2) und äußeren (7) Schichten;
- eine Trennschicht (5), die zwischen der Gewebelagen (4, 6) aus einem dritten Polymermaterial hergestellt ist;
- eine sechste Schicht (3) aus einem vierten Polymermaterial hergestellt, das zwischen dem inneren (2) und äußeren (7) Schichten;
**dadurch gekennzeichnet, dass**:
- die beiden Gewebeverstärkungsschichten (4, 6) aus gestrickten und geflochtenen Typ, wobei einer der beiden Gewebelagen (4, 6) eine geflochtene Schicht ist und der andere eine gestrickte Schicht mit einer Vielzahl von Kettenmaschen der Trikottyp;
- die vierte Polymermaterial ein thermoplastisches Polymermaterial;
- die erste thermoplastische Polymermaterial, zweiter thermoplastische Polymermaterial, dritten und vierten Polymermaterial Polymermaterial sind alle mit einem Weich-PVC-basierte Matrix;
- das erste thermoplastische Polymermaterial eine Shore-A-Härte von 80 bis 70;
- das zweite thermoplastische Polymermaterial und das vierte Polymermaterial eine Shore-A-Härte von 70 bis 60;
- das dritte Polymermaterial eine Shore-A-Härte zwischen 63 und 73;
- die Dicke (S2) der inneren Schicht (2) von 0,5 mm bis 1,8 mm ist;
- die Dicke (S5) der Trennschicht (5) von 0,4 mm bis 0,9 mm ist;
- die Dicke (S7) der äußeren Schicht (7) von 0,6 mm bis 1 mm ist;
- die sechste Schicht (3) eine Folie mit einer Dicke (S3) von weniger als 0,5 mm ist.

2. Schlauch nach Anspruch 1, wobei die sechste Schicht (3) außerhalb sowohl des genannten Gewebelagen (4, 6).

3. Schlauch nach Anspruch 2, wobei die sechste Schicht (3) einen Farbstoff der Ruß-Typ zum Verhindern Algenblüte, die sechste Anti-Algen-Schicht (3) zwischen der Innenschicht (2) angeordnet ist und dadurch die innersten Schicht der Gewebelagen (4, 6).

4. Schlauch nach dem vorhergehenden Anspruch, wobei der Ruß Färbemittel Gehalt von 0,1% bis 10 Gew.% beansprucht, wobei die vierte Polymermaterial.

5. Schlauch nach Anspruch 1, wobei das Gestrick-Schicht (6) außerhalb der Trennschicht (5), wobei letzterer außerhalb des geflochtenen Gewebeschicht (4).

6. Schlauch nach den Ansprüchen 3 und 5, wobei die geflochtene Stoffschicht (4) in Kontakt mit der sechsten Anti-Algen-Schicht (3).

7. Schlauch nach Anspruch 5 oder 6, wobei die Außenschicht (7) in Kontakt mit dem Gewirk Schicht (6) ist.

## Revendications

1. Un tuyau d'irrigation à six-couche comprenant:
- une couche intérieure (2) en contact direct avec le liquide à transporter qui se compose d'un premier matériau polymère thermoplastique;
- une couche extérieure (7) susceptible d'être tenu par un utilisateur, faite d'un deuxième matériau polymère thermoplastique;
- deux couches de renforcement en tissu (4, 6) interposé entre lesdites couches intérieure (2) et extérieure (7);
- une couche de séparation (5) interposée entre lesdites couches de tissu (4, 6), faite d'un troisième matériau polymère;
- une sixième couche (3) faite d'une quatrième matériau polymère interposé entre lesdites couches intérieure (2) et extérieure (7);
**caractérisé en ce que**:
- lesdites deux couches de renforcement en tissu (4, 6) sont du type tressé et tricoté, l'une desdites deux couches en tissu (4, 6) étant une couche tressée et l'autre étant une couche tricotée comportant une pluralité de points de chaîne du type tricot;
- ledit quatrième matériau polymère est un matériau polymère thermoplastique;
- lesdits premier matériau polymère thermoplastique, deuxième matériau polymère thermoplastique, troisième matériau polymère et quatrième matériau polymère comprennent toutes une matrice à base de PVC plastifié;
- ledit premier matériau polymère thermoplastique a une dureté Shore A de 80 à 70;
- ledit second matériau polymère thermoplastique et ledit quatrième matériau polymère ont une dureté Shore A de 70 à 60;
- ledit troisième matériau polymère a une dureté Shore A de 63 à 73;
- l'épaisseur (S2) de la couche intérieure (2) est de 0,5 mm à 1,8 mm;
- l'épaisseur (S5) de la couche de séparation (5) est de 0,4 mm à 0,9 mm;
- l'épaisseur (S7) de la couche extérieure (7) est de 0,6 mm à 1 mm;
- ladite sixième couche (3) est un film ayant une épaisseur inférieure à 0,5 mm.

2. Tuyau selon la revendication 1, dans lequel ladite sixième couche (3) est externe à toutes les deux lesdites couches en tissu (4, 6).

3. Tuyau selon la revendication 1, dans lequel ladite sixième couche (3) comprend un agent de coloration du type noir de carbone pour empêcher la prolifération d'algues, ladite sixième couche anti-algue (3) étant interposée entre ladite couche intérieure (2) et la couche la plus interne desdites couches en tissu (4, 6).

4. Tuyau selon la revendication précédente, dans lequel le teneur dudit agent de coloration noir de carbone est de 0,1% à 10% en poids dudit quatrième matériau polymère.

5. Tuyau selon la revendication 1, dans lequel ladite couche en tissu tricotée (6) est externe à la couche de séparation (5), cette dernière étant à l'extérieur de ladite couche de tissu tressé (4).

6. Tuyau selon les revendications 3 et 5, dans lequel ladite couche de tissu tressé (4) est en contact avec ladite sixième couche anti-algue (3).

7. Tuyau selon la revendication 5 ou 6, dans lequel ladite couche extérieure (7) est en contact avec ladite couche de tissu tricotée (6).
